# FASCICULE DE BREVET EUROPEEN

(11) **EP 3 553 942 B1**
(45) Date de publication et mention de la délivrance du brevet: **13.07.2022**
(21) Numéro de dépôt: 19168494.3
(22) Date de dépôt: 10.04.2019
(51) Int. Cl.: H02S 20/23, F24S 25/37, E04D 1/36, F24S 25/61, F24S 25/00

(54) **DISPOSITIF DE FIXATION D'UN PANNEAU SOLAIRE À UN BÂTI, ENSEMBLE DE FIXATION ET PROCÉDÉ DE RÉALISATION ASSOCIÉS**
VORRICHTUNG ZUR BEFESTIGUNG EINES SOLARPANEELS AN EIN TRAGELEMENT, ENTSPRECHENDE BEFESTIGUNGSANORDNUNG UND ENTSPRECHENDES HERSTELLUNGSVERFAHREN
DEVICE FOR ATTACHING A SOLAR PANEL TO A FRAME, ATTACHMENT ASSEMBLY AND ASSOCIATED MANUFACTURING METHOD

(30) Priorité: 11.04.2018 FR 1853182
(43) Date de publication de la demande: 16.10.2019
(73) Titulaire: EPC Solaire, 69290 Saint-Genis-les-Ollieres (FR)
(72) Inventeur: BOUSQUET, Jean-Paul, 69210 SAINT PIERRE LA PALUD (FR); CHALEYSSIN, Gérard, 69260 SAINT-GENIS-LES-OLLIERES (FR)
(74) Mandataire: Weber, Jean-François

(56) Documents cités:
- EP-A2- 1 267 418
- WO-A1-95/28535
- WO-A2-2010/111383
- DE-A1- 2 403 623
- DE-A1- 4 201 489
- DE-U1-202009 016 872
- US-A1- 2003 177 708

## Description

La présente invention concerne la fixation de panneaux solaires sur un bâti, et en particulier la fixation d'un panneau solaire sur une toiture à l'aide d'une bande de raccordement intermédiaire souple.

La présente invention concerne plus précisément un dispositif de fixation d'un panneau solaire à un bâti de type toit, ledit dispositif de fixation étant destiné d'une part à être solidarisé audit bâti par une bande de raccordement sensiblement souple, et d'autre part à recevoir ledit panneau.

La présente invention concerne également un ensemble de fixation d'un panneau solaire à un bâti de type toit.

La présente invention concerne en outre un procédé de réalisation d'un ensemble de fixation d'un panneau solaire à un bâti de type toit, ledit procédé de réalisation comprenant au moins :
- une étape de fourniture d'une bande de raccordement sensiblement souple conçue pour être reliée audit bâti, et
- une étape de fourniture d'un dispositif de fixation destiné d'une part à être solidarisé audit bâti par la bande de raccordement sensiblement souple, et d'autre part à recevoir ledit panneau.

Il est bien connu de positionner un panneau solaire sur un bâti, et en particulier une toiture, afin que ce panneau capte les rayons du soleil et les convertisse en électricité ou en chaleur.

Ce panneau solaire connu comprend généralement une plaque formant capteur solaire et un cadre entourant la plaque pour supporter cette dernière et assurer au panneau une certaine tenue mécanique.

Il est ainsi connu de mettre en œuvre différents éléments de fixation permettant d'assurer la fixation d'un panneau solaire à un toit. Ces éléments de fixation connus comprennent un élément support destiné à supporter le cadre du panneau solaire et être solidarisé à ce dernier, et une bande raccordant le toit, c'est-à-dire un élément de toit tel qu'une membrane présentant une certaine étanchéité, avec l'élément support. La bande est destinée à être solidarisée d'une part au toit et d'autre part à l'élément support pour relier ce dernier au toit, solidarisant de cette manière également le cadre, et par extension l'ensemble du panneau solaire, au toit.

L'élément support est, de manière connue, relié à la bande par l'intermédiaire d'un système de vis et de boulons et rondelles adaptés aux vis. Chaque vis traverse successivement une rondelle respective, la bande de raccordement, l'élément support et un boulon respectif, pour coincer l'élément support et la bande de raccordement l'une contre l'autre entre le boulon et la rondelle respectifs, grâce au serrage de la vis et du boulon respectif.

On connaît également une configuration voisine où les rondelles sont remplacées par une plaque ayant la même fonction. La plaque est ainsi traversée par les vis pour serrer la bande contre l'élément support, les vis étant également associées à des boulons respectifs pour le serrage.

Néanmoins, ces systèmes de fixation ne sont pas totalement satisfaisants en termes d'industrialisation. Ainsi, pour réaliser ces systèmes de fixation connus, il est nécessaire de perforer un grand nombre d'éléments différents et de les positionner précisément les uns en face des autres pour faire correspondre les perforations où passent les vis, qu'il faut ensuite serrer avec le boulon. Or, ces opérations sont relativement longues et compliquées à mettre en œuvre, d'autant qu'une bonne précision est attendue notamment concernant le positionnement des perforations les unes en face des autres, et le vissage de chaque vis avec son boulon respectif.

La mise en œuvre de ces systèmes de fixation connus peut entraîner des difficultés et retards importants, notamment lorsque les perforations ne sont pas correctement effectuées ou positionnées. Ces systèmes connus présentent également un risque de désolidarisation de l'élément support et de la bande de raccordement, notamment lorsque les vis sont mal serrées avec leurs boulons respectifs, ce qui entraîne par extension un risque de détachement du panneau solaire vis-à-vis du toit et donc un risque de non-fonctionnement de la plaque formant capteur solaire, qui ne fournit alors plus d"énergie, voire sa détérioration. De plus, même lorsque les perforations sont correctement effectuées et les vis correctement serrées avec leurs boulons respectifs, le montage de ces nombreux différents éléments avec l'élément support et la bande de raccordement peut s'avérer particulièrement long, entraînant une faible cadence de production, notamment en ce qui concerne la production de l'ensemble comprenant l'élément support et la bande de raccordement solidarisés. De surcroît, lorsque le panneau solaire et la bande liée à ce dernier via l'élément support sont soumis à de fortes tractions, par exemple à des forces exercées par un vent violent, la bande a tendance à se déchirer au niveau des vis et à se détacher en conséquence de l'élément support, désolidarisant de fait le panneau solaire du toit, avec les conséquences négatives déjà mentionnées. Enfin, les vis, leurs boulons et rondelles associés se corrodent au cours du temps, ce qui rend leur fiabilité douteuse à long terme.

Le document antérieur DE-202009016872U1 décrit un système de montage de modules solaires, comprenant un profil de fixation pour fixer le système de montage à un emplacement de montage, un élément de support connecté au profil de fixation et portant au moins un module solaire, l'élément de support formant un sabot coulissant pour recevoir un profil coulissant mobile selon au moins une direction longitudinale.

Les objets assignés à la présente invention visent en conséquence à remédier aux différents inconvénients énumérés précédemment et à proposer un nouveau dispositif de fixation, dont la conception lui permet de fixer un panneau solaire à un bâti de type toit de manière simple, rapide et durable.

Un autre objet de l'invention vise à proposer un nouveau dispositif de fixation présentant une bonne compacité.

Un autre objet de l'invention vise à proposer un nouveau dispositif de fixation dont la conception lui permet d'être particulièrement résistant, notamment vis-à-vis des conditions extérieures, telles qu'un vent violent ou de la pluie.

Un autre objet de l'invention vise à proposer un nouveau dispositif de fixation présentant une importante fiabilité dans le temps, et qui ne nécessite aucune maintenance particulière ou seulement une maintenance minimale.

Un autre objet de l'invention vise à proposer un nouveau dispositif de fixation dont la conception lui permet d'être d'assurer un attachement particulièrement robuste d'un panneau solaire à un bâti de type toit, et ce quelles que soient les conditions extérieures, telles qu'un vent violent ou de la pluie.

Un autre objet de l'invention vise à proposer un nouveau dispositif de fixation dont la conception lui confère une relative légèreté.

Un autre objet de l'invention vise à proposer un nouveau dispositif de fixation dont la fabrication est facile à mettre en œuvre et à coût maîtrisé.

Un autre objet de l'invention vise à proposer un nouveau dispositif de prise de fixation dont la conception minimise le risque d'erreur d'association avec une bande de raccordement.

Un autre objet de l'invention vise à proposer un nouveau dispositif de fixation dont la structure est simple et ne comprend qu'un nombre limité de pièces distinctes.

Un autre objet de l'invention vise à proposer un nouveau dispositif de fixation dont la conception diminue le risque qu'il se corrode de manière à impacter sa fonction.

Un autre objet de l'invention vise à proposer un nouveau dispositif de fixation dont la conception lui permet d'être solidarisé très rapidement, facilement et de manière durable à une bande de raccordement.

Un autre objet de l'invention vise à proposer un nouvel ensemble de fixation qui permet le rattachement d'un panneau solaire à un bâti de type toit, et ce de manière particulièrement pratique, robuste et rapide.

Un autre objet de l'invention vise à proposer un nouvel ensemble de fixation dont la conception lui permet d'être solidarisé à un bâti sans dégrader ce dernier.

Un autre objet de l'invention vise à proposer un nouveau procédé de réalisation d'un ensemble de fixation d'un panneau solaire à un bâti de type toit, ledit procédé ne comportant qu'un nombre limité d'étapes simples, rapides et faciles à mettre en œuvre, tout en permettant la fourniture d'un ensemble de fixation présentant une excellente fiabilité.

Les objets assignés à la présente invention sont atteints à l'aide d'un dispositif de fixation d'un panneau solaire à un bâti de type toit, ledit dispositif de fixation étant destiné d'une part à être solidarisé audit bâti par une bande de raccordement sensiblement souple, et d'autre part à recevoir ledit panneau, caractérisé en ce qu'il comprend au moins un profilé formant une première mâchoire et une seconde mâchoire, ledit profilé étant conçu pour être déformé dans la région desdites mâchoires afin de coincer ladite bande de raccordement entre lesdites mâchoires.

Les objets assignés à la présente invention sont également atteints à l'aide d'un ensemble de fixation d'un panneau solaire à un bâti de type toit, caractérisé en ce qu'il comprend un dispositif de fixation tel que susmentionné, et une bande de raccordement sensiblement souple conçue pour être reliée d'une part audit bâti et d'autre part audit dispositif de fixation, afin de solidariser ce dernier audit bâti.

Les objets assignés à la présente invention sont en outre atteints à l'aide d'un procédé de réalisation d'un ensemble de fixation d'un panneau solaire à un bâti de type toit, ledit procédé de réalisation comprenant au moins :
- une étape de fourniture d'une bande de raccordement sensiblement souple conçue pour être reliée audit bâti,
- une étape de fourniture d'un dispositif de fixation destiné d'une part à être solidarisé audit bâti par la bande de raccordement sensiblement souple, et d'autre part à recevoir ledit panneau,
caractérisé en ce que le dispositif de fixation comprend au moins un profilé formant une première mâchoire et une seconde mâchoire,
et en ce qu'il comprend une étape de déformation dudit profilé dans la région desdites mâchoires afin de coincer ladite bande de raccordement entre lesdites mâchoires.

D'autres objets et avantages de l'invention ressortiront plus en détails à la lecture de la description qui suit, et à l'aide des figures annexées fournies à titre purement explicatif et non limitatif, dans lesquels :
La figure 1 illustre, selon une vue en perspective, un mode de réalisation des dispositif de fixation et ensemble de fixation selon l'invention, avec deux profilés reliés chacun à une bande de raccordement respective et solidarisés par une entretoise.
La figure 2 illustre, selon une vue en perspective, un détail du dispositif de fixation de la figure 1, représentant en particulier un profilé et une bande de raccordement reliée à ce dernier.
La figure 3 illustre, selon une vue de côté, une partie d'un dispositif de fixation qui peut être conforme à celui des figures 1 et 2, où deux mâchoires enserrent une bande de raccordement, également partiellement illustrée, au point de la déformer.
Les figures 4 à 7 illustrent, selon une vue de côté, un dispositif de fixation et une bande de raccordement associée ainsi qu'une presse dans différentes configurations, représentant ainsi différentes étapes d'un procédé de réalisation d'un ensemble de fixation selon l'invention. Plus précisément, la figure 4 illustre le dispositif de fixation seul, avant son association avec une bande de raccordement, et une presse.
La figure 8 illustre, selon une vue en perspective, un ensemble de fixation comprenant un dispositif de fixation et une bande de raccordement associée, ainsi qu'une presse pourvue de poinçons, après une étape de pressage et une étape de poinçonnage, selon un exemple de procédé de réalisation selon l'invention.
La figure 9 illustre, selon une vue de côté, une partie inférieure d'un ensemble de fixation comprenant un dispositif de fixation et une bande de raccordement associée, ainsi qu'une presse et des poinçons, après une étape de pressage et avant une étape de poinçonnage, selon un exemple de procédé de réalisation selon l'invention.

L'invention concerne, selon un premier aspect illustré aux figures, un dispositif de fixation 1 d'un panneau solaire (non illustré) à un bâti (non illustré) de type toit.

Ainsi, le dispositif de fixation 1 est avantageusement destiné à attacher, c'est-à-dire à solidariser, de préférence de manière réversible, le panneau solaire audit bâti.

Préférentiellement, le bâti de type toit est principalement formé par une toiture, notamment la surface ou paroi supérieure d'un bâtiment, en particulier une paroi ou surface supérieure issue de matériaux recouvrant ledit bâtiment et le protégeant contre les intempéries.

Ledit bâti est donc de façon préférentielle formé par un toit, par exemple le toit d'une habitation, d'un local commercial ou industriel ou même d'un parking. En tout état de cause, le bâti est avantageusement destiné à fournir une certaine protection, préférentiellement étanche, à une structure située en-dessous de ce dernier, et notamment un édifice, ladite protection étant par exemple conçue pour protéger la structure des intempéries. Le bâti, en particulier formé par une toiture, s'étend de préférence de manière localement voire globalement plane, au moins dans la zone où le panneau solaire est fixé audit bâti. De façon préférentielle, le bâti est une toiture présentant une inclinaison, par rapport à l'horizontale, comprise entre 0 et 45°, de préférence entre 0 et 20°, plus préférentiellement entre 0 et 10°, et plus préférentiellement encore entre 0 et 2°, ou nulle..

Préférentiellement, le bâti est formé par une toiture étanchée, par exemple une toiture comprenant au moins une membrane souple, qui permet donc d'étancher ladite toiture (avantageusement en combinaison avec d'autres membranes souples similaires). Ladite membrane souple est de préférence principalement formée d'un matériau choisi parmi le groupe comprenant le bitume, les élastomères dont les caoutchoucs éthylène-propylène-diène monomère (EPDM), le polychlorure de vinyle (PVC), et les polyoléfines dont les polyoléfines thermoplastiques (TPO) et les polyoléfines flexibles (FPO). Bien évidemment, la membrane souple est de préférence solidaire du reste du bâti.

De façon avantageuse, le panneau solaire et le dispositif de fixation sont destinés à être positionnés sur la membrane souple du bâti, et solidarisés à cette dernière.

De préférence, ledit panneau solaire comprend une plaque formant capteur solaire, ledit capteur solaire captant avantageusement les rayons du soleil pour fournir de l'électricité ou de la chaleur. Par exemple, la plaque forme un capteur solaire thermique conçu pour capter la chaleur du rayonnement solaire et la transférer à un fluide caloporteur de préférence destiné à chauffer un bâtiment et/ou à produire de l'eau chaude, ou bien encore la plaque forme un capteur solaire photovoltaïque (ou module photovoltaïque) conçu pour convertir le rayonnement solaire en électricité. Alternativement, la plaque forme un capteur solaire hybride à la fois photovoltaïque et thermique. De préférence, ladite plaque est sensiblement plane et présente une surface extérieure destinée à être tournée vers l'extérieur, c'est-à-dire vers le soleil ou à recevoir les rayons du soleil, et une surface intérieure opposée et parallèle à ladite surface extérieure. Ladite surface intérieure est de préférence tournée vers le bâti. De manière préférentielle, ladite plaque comprend plusieurs bords qui la délimitent, par exemple elle comprend quatre bords, et est de forme générale rectangulaire ou carrée.

Préférentiellement, ledit panneau solaire comprend également un cadre attaché à ladite plaque et entourant en totalité ou en partie cette dernière. Ledit cadre est avantageusement sensiblement rigide et assure ainsi en particulier la tenue mécanique de ladite plaque, empêchant par exemple à cette dernière de se déformer et de se détériorer. Le cadre empêche notamment ladite plaque de se plier à cause du vent ou à cause de la manipulation du panneau solaire lors de son installation sur le bâti via le dispositif de fixation 1. De manière préférentielle, ledit cadre comprend est de forme générale rectangulaire ou carrée.

Selon l'invention, ledit dispositif de fixation 1 est destiné d'une part à être solidarisé audit bâti par une bande de raccordement 2 sensiblement souple, et d'autre part à recevoir ledit panneau. En d'autres termes, le dispositif de fixation 1 est avantageusement conçu pour maintenir ledit panneau sur ledit bâti par l'intermédiaire de la bande de raccordement 2, laquelle est de préférence destinée à être fixée directement sur le bâti. Ainsi, avantageusement, le dispositif de fixation 1 supporte ledit panneau et le solidarise à la bande de raccordement 2, elle-même solidarisée au bâti.

De façon avantageuse, le dispositif de fixation 1 est destiné à être d'abord relié à la bande de raccordement 2, par exemple au sein d'un atelier ou d'une usine, ou bien encore à proximité du bâti, puis audit panneau solaire. Préférentiellement, après réalisation de la liaison de la bande de raccordement 2 et du dispositif de fixation 1 et avant celle du dispositif de fixation 1 et du bâti, la bande de raccordement 2 est attachée audit bâti, de préférence de façon irréversible, par exemple par soudage et plus précisément par thermo-soudage.

Ladite bande de raccordement 2 est ainsi avantageusement attachée directement au bâti de type toit, et plus particulièrement à la membrane souple qui est avantageusement étanche.

De manière préférentielle, ladite bande de raccordement 2 est principalement formée d'un matériau choisi parmi le groupe comprenant le bitume, les élastomères dont les caoutchoucs éthylène-propylène-diène monomère (EPDM), le polychlorure de vinyle (PVC), et les polyoléfines dont les polyoléfines thermoplastiques (TPO) et les polyoléfines flexibles (FPO). La bande de raccordement 2 est de préférence formée d'un matériau sensiblement souple, et peut ainsi s'adapter à différents types de bâtis et notamment différents types de toits. Préférentiellement, ladite bande de raccordement 2 présentent néanmoins des dimensions, et notamment une épaisseur, suffisantes pour garantir une certaine tenue mécanique, une force minimum devant, optionnellement, être appliquée à la bande de raccordement 2 pour la déformer significativement. De façon avantageuse, la bande de raccordement 2 est destinée à être disposée sur la membrane souple du bâti et à être attachée à cette dernière, notamment par thermosoudage, ce qui est d'autant plus facile que ladite bande de raccordement 2 est plus avantageusement encore formée d'un matériau similaire ou identique à celui formant ladite membrane souple. Une telle configuration permet notamment d'augmenter la résistance à l'arrachement de la bande de raccordement, et donc du dispositif de fixation 1 et du panneau solaire, vis-à-vis de la membrane souple, et donc du bâti.

La bande de raccordement 2 présente par exemple, avant d'être solidarisée au dispositif de fixation 1, une forme générale rectangulaire ou carrée, et une épaisseur comprise entre 1 et 10 mm, plus préférentiellement comprise entre 1,2 et 5 mm, encore plus préférentiellement comprise entre 1,8 et 3,5 mm.

Selon le mode de réalisation préféré illustré aux figures, le dispositif de fixation 1 comprend avantageusement un moyen d'attachement 3 audit panneau solaire, et plus précisément audit cadre. Le moyen d'attachement 3 comprend par exemple au moins une, de préférence au moins deux rainures 4, 5 sensiblement droites et parallèles. Chaque rainure 4, 5 est par exemple destinée à recevoir au moins un premier écrou destiné à recevoir une vis. La vis est elle-même destinée, une fois qu'elle est associée audit premier écrou, à traverser une platine de fixation et à plaquer cette dernière contre les bords extérieurs de la rainure 4, 5 considérée. Ladite platine de fixation est elle-même conçue pour plaquer et serrer, lorsqu'elle est associée à ladite première vis, un bord dudit panneau solaire, et plus précisément dudit cadre, contre les bords extérieurs de la rainure 4, 5 considérée. De façon avantageuse, le dispositif de fixation 1 comprend, pour chaque rainure 4, 5, deux ensembles écrou/vis/platine de fixation mentionnés ci-avant, associés distinctement de part et d'autre du panneau solaire pour le maintenir plaqué contre le profilé 6 (et plus précisément contre la portion supérieure, qui sera décrite ci-après). Chaque rainure 4, 5 comprend par exemple une partie supérieure étroite et une partie inférieure large, tandis que la vis et l'écrou sont respectivement destinés à être mise en correspondance avec lesdites parties supérieure étroite et inférieure large, notamment par glissement de l'écrou dans la rainure 4, 5 considéré, de manière à ce que ledit écrou soit empêché de sortir de ladite partie inférieure large par ladite partie supérieure étroite, ladite vis associée audit écrou étant ainsi également empêchée de sortir de ladite rainure 4, 5. Optionnellement, la vis, l'écrou et la platine de fixation sont ensuite empêchés de bouger le long de la rainure grâce à un moyen de blocage approprié, le serrage de la platine de fixation contre les bords extérieurs de la rainure 4, 5 considérée pouvant sinon suffire à bloquer ledit panneau solaire. Bien évidemment, chaque rainure 4, 5 est de préférence conçue pour être positionnée en regard du cadre, et donc à l'opposé du bâti par rapport au reste du dispositif de fixation 1.

Selon une caractéristique de l'invention, comme illustré aux figures, le dispositif de fixation 1 comprend au moins un profilé 6. De préférence, le profilé 6 forme la plus grande partie du dispositif de fixation 1, voire la quasi-totalité ou la totalité de ce dernier, à l'exception par exemple d'une partie du moyen d'attachement 3, comme la vis et l'écrou mentionnés précédemment.

Par exemple, le profilé 6 comprend une portion supérieure 15 destinée à recevoir le panneau solaire, c'est-à-dire préférentiellement le panneau solaire lui-même et/ou toute pièce nécessaire pour l'inclinaison du panneau et/ou la fixation de ce dernier à ladite portion supérieure 15. Ledit moyen d'attachement 3 forme par exemple en partie ou en totalité la portion supérieure 15. Ledit moyen d'attachement 3 est préférentiellement au moins en partie venu de matière avec le reste dudit profilé 6. Ladite portion supérieure 15 présente par exemple une forme générale en U ou fer à cheval, chaque extrémité de la forme en U ou fer à cheval formant en son sein l'une respective des rainures 4, 5.

De préférence, ledit profilé 6 est un produit métallurgique ou plastique (notamment en polymères), présentant un profil déterminé et constant. De façon avantageuse, ledit profilé 6 est donc principalement formé d'un matériau métallique, de préférence de l'aluminium et/ou de l'acier, ou d'un matériau plastique, de préférence du polyéthylène haute densité (PEHD).

De manière avantageuse, le profilé 6 est formé d'un seul tenant, c'est-à-dire d'une seule pièce, et est plus préférentiellement monolithique, ou alternativement formé de plusieurs pièces reliées fixement entre elles, par exemple par soudage.

Par exemple, le profilé 6 est principalement, voire entièrement, formé par une platine sensiblement allongée de section transversale sensiblement constante.

Selon le mode de réalisation représenté aux figures, le profilé 6 comprend une partie d'appui 7 avantageusement sensiblement plane et destinée à se trouver en appui sur le bâti directement ou indirectement par l'intermédiaire de la bande de raccordement 2. Ladite partie d'appui 7 n'est de préférence pas directement reliée en tant que telle au bâti ou à la bande de raccordement 2, mais repose dessus de façon à lui faire supporter une partie au moins du poids du dispositif de fixation 1 et par extension du poids du panneau solaire.

Selon le même mode de réalisation représenté aux figures, le profilé 6 comprend donc préférentiellement une portion inférieure 16 présentant une surface d'appui 8 destinée à être directement en contact avec le bâti ou la bande de raccordement 2 lorsque le dispositif de fixation 1 est fixé audit bâti via la bande de raccordement 2. Ainsi, de façon préférentielle, la portion inférieure 16 comprend notamment la partie d'appui 7, laquelle comprend elle-même une portion ou la totalité de la surface d'appui 8. De préférence, cette dernière est destinée soit à plaquer au moins une partie de la bande de raccordement 2 contre ledit bâti, soit à être plaquée directement contre ledit bâti. La surface d'appui 8 est préférentiellement sensiblement plane.

En résumé, le profilé 6 comprend préférentiellement la portion supérieure 15 en contact avec le panneau solaire et la portion inférieure 16 en appui sur le bâti éventuellement via la bande de raccordement 2.

Toujours selon le mode de réalisation représenté aux figures, le profilé 6 comprend avantageusement en outre une portion intermédiaire 9 reliant ladite portion supérieure 15 et ladite portion inférieure 16. Plus avantageusement, ladite portion intermédiaire 9 comprend elle-même une portion oblique 10 s'élevant à l'oblique à partir de la portion inférieure 16, et une portion droite 11, descendant sensiblement verticalement et/ou perpendiculairement par rapport à ladite partie d'appui 7, à partir de la portion supérieure 15. Plus préférentiellement encore, ladite portion intermédiaire 9 comprend également une portion de solidarisation 12 des portions oblique 10 et droite 11, ladite portion de solidarisation 12 étant par exemple conçue pour former un renfort du profilé 6.

Toujours selon l'invention, comme illustré aux figures, le profilé 6 forme une première mâchoire 13 et une seconde mâchoire 14. Ainsi, le profilé 6 comprend avantageusement lesdites première et seconde mâchoires 13, 14 qui forment chacune une partie respective du profilé 6, lesdites deux parties étant destinées à se rapprocher l'une vers l'autre pour serrer un objet, le coincer, l'assujettir, le tenir de manière ferme et fixe. De manière préférentielle, ladite seconde mâchoire 14 est venue de matière avec ladite première mâchoire 13. Lesdites mâchoires 13, 14 sont donc préférentiellement formées d'une seule pièce, c'est-à-dire qu'elles sont avantageusement solidaires, et plus avantageusement d'un seul tenant, lequel est plus avantageusement encore d'un même matériau et sensiblement monolithique. Lesdites mâchoires 13, 14 sont de façon préférentielle formée d'un même matériau, qui est en particulier un matériau similaire ou identique à celui formant le reste du profilé 6, par exemple un matériau métallique tel que l'aluminium et/ou l'acier, ou un matériau plastique tel que le polyéthylène haute densité (PEHD).

Selon l'invention, ledit profilé 6 est conçu pour être déformé dans la région desdites mâchoires 13, 14 afin de coincer ladite bande de raccordement 2 entre lesdites mâchoires 13, 14. Ainsi, préférentiellement, le profilé 6 est destiné à être déformé, au niveau desdites mâchoires 13, 14, par exemple au niveau de ladite première mâchoire 13, de façon à ce que lesdites première et seconde mâchoires 13, 14 enserrent ladite bande de raccordement 2. De préférence, au moins l'une des mâchoires 13, 14, par exemple la première mâchoire 13, est donc destinée à subir une déformation, notamment par l'application d'une force de pression en direction de l'autre mâchoire 13, 14, par exemple la seconde mâchoire 14, de façon à coincer (c'est-à-dire emprisonner ou maintenir) entre elles ladite bande de raccordement 2.

Ledit profilé 6 comprend préférentiellement une partie de jointure 28 où lesdites première et seconde mâchoires 13, 14 se rejoignent, c'est-à-dire se solidarisent l'une avec l'autre, ladite partie de jointure 28 étant donc une partie commune auxdites mâchoires 13, 14. Avantageusement, le profilé 6 est conçu pour être déformé au niveau d'une des mâchoires 13, 14, au niveau des deux mâchoires 13, 14 (chacune étant donc déformée distinctement de l'autre) et/ou au niveau de la partie de jointure 28. Plus avantageusement, le profilé 6 est conçu pour être déformé au niveau au moins de la première mâchoire 13.

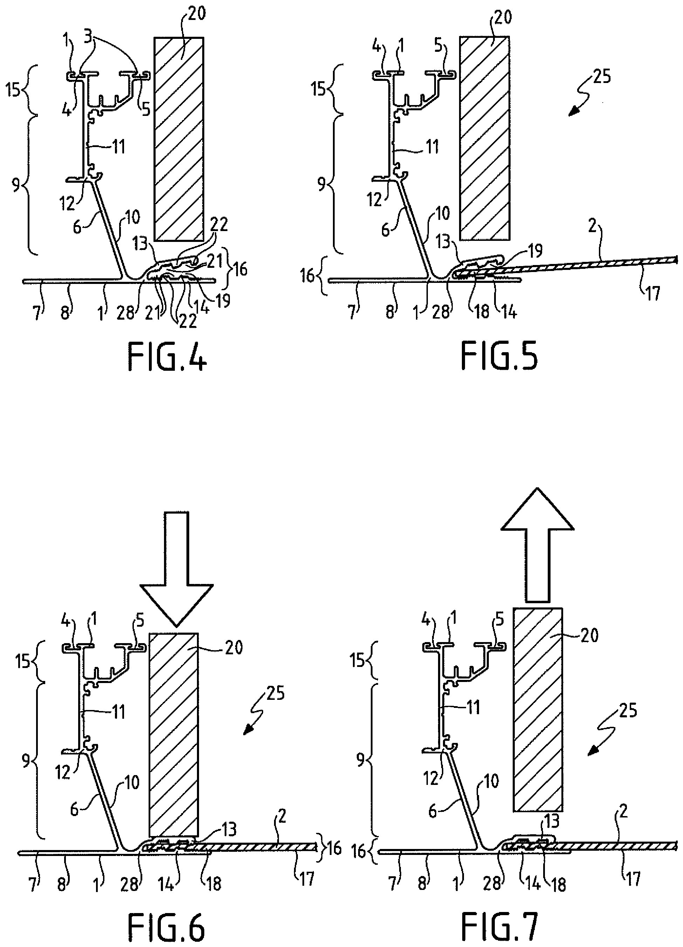

De préférence, comme illustré aux figures et particulièrement visible aux figures 4 à 7, lesdites première et seconde mâchoires 13, 14 sont conçues pour être pressées l'une vers l'autre, par exemple au moyen d'une presse, afin d'enserrer entre elles ladite bande de raccordement 2. Ainsi, au moins l'une des mâchoires 13, 14, par exemple la première mâchoire 13, est destinée à être pressée, c'est-à-dire poussée, en direction de l'autre mâchoire 13, 14, par exemple la seconde mâchoire 14, de façon à rapprocher les mâchoires 13, 14 l'une de l'autre, par exemple en rapprochant par pression ladite première mâchoire 13 de ladite seconde mâchoire 14, de façon à coincer ladite bande de raccordement 2 entre lesdites mâchoires 13, 14.

Ladite bande de raccordement 2 comprend donc avantageusement une partie d'attache 17, destinée à être attachée, notamment par thermo-soudure, audit bâti, et une partie d'enserrement 18, destinée à être enserrée, c'est-à-dire serrée, maintenue, emprisonnée ou coincée, entre lesdites première et seconde mâchoires 13, 14. Optionnellement, la bande de raccordement 2 comprend une partie repliée et positionnée sous le profilé 6 entre ce dernier et le bâti, de façon à ce que le profilé 6 ne vienne pas en appui directement sur le bâti mais indirectement via la bande de raccordement 2.

De façon avantageuse, ledit profilé 6 présente une section sensiblement en forme de crochet qui forme lesdites mâchoires 13, 14. Ainsi, le profilé 6 présente avantageusement une forme sensiblement allongée dont une section transversale présente ladite forme en crochet, qui peut par exemple présenter une allure générale de C, de V ou de U, voire de L, chaque mâchoire 13, 14 formant une moitié respective du crochet d'une allure de C, de V ou de U, voire de L.

De préférence, lesdites première et seconde mâchoires 13, 14 sont venues de matière avec au moins une partie, et plus préférentiellement la totalité, du reste du profilé 6, par exemple avec ladite partie d'appui 7, ladite portion intermédiaire 9, ladite portion oblique 10, et/ou ladite portion supérieure 15.

De façon avantageuse, les première et seconde mâchoires 13, 14 sont conçues pour solidariser de manière permanente ledit profilé 6 à la bande de raccordement 2, c'est-à-dire qu'il est relativement difficile de désolidariser ledit profilé de ladite bande 2.

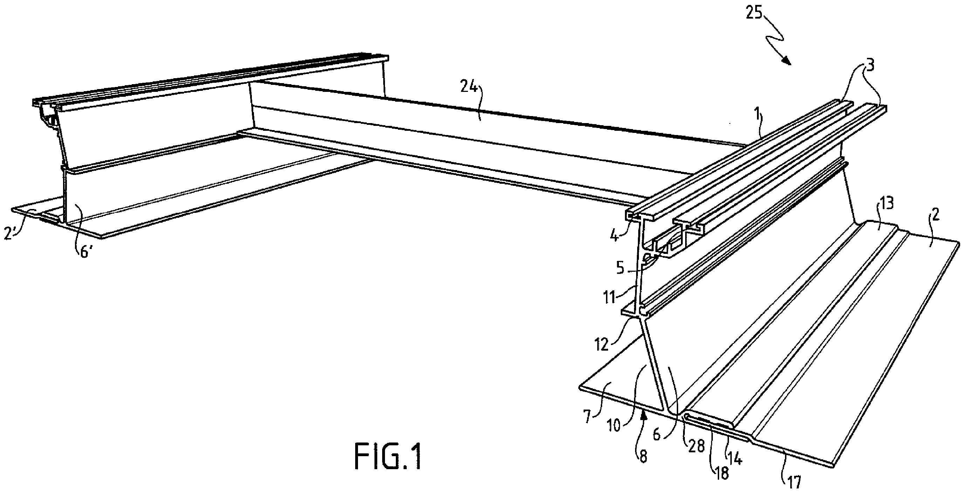

Préférentiellement, lesdites mâchoires 13, 14 sont conçues pour passer, par déformation plastique du profilé 6 :
- d'une position ouverte, où elles ménagent entre elles un espace 19 suffisant pour y glisser une portion de ladite bande 2, de préférence ladite partie d'enserrement 18, comme illustré aux figures 4 et 5,
- à une position fermée, où lesdites mâchoires 13, 14 enserrent ladite bande 2, plus précisément ladite portion de ladite bande 2, et encore plus précisément ladite partie d'enserrement 18, pour l'attacher ainsi audit profilé 6, comme illustré aux figures 1 à 3, 6 et 7. Ainsi, en position fermée, la bande 2 est avantageusement solidement enserrée, de manière permanente, par lesdites mâchoires 13, 14, sans qu'il soit possible de libérer facilement ladite bande 2 sans déformer à nouveau le profilé 6, et plus précisément au moins l'une desdites mâchoires 13, 14, par exemple plastiquement, c'est-à-dire de manière irréversible, en dégradant les qualités mécaniques du profilé 6 et/ou de ladite mâchoire 13, 14 déformé(e) à nouveau.

En d'autres termes encore, lesdites première et seconde mâchoires 13, 14 sont préférentiellement conçues pour qu'au moins l'une d'elle soit déformée plastiquement, c'est-à-dire irréversiblement, par pression en la déplaçant vers l'autre, et ce afin de serrer (et plus précisément d'enserrer) ladite bande de raccordement 2 entre lesdites mâchoires 13, 14.

En position ouverte, les mâchoires 13, 14 sont donc avantageusement relativement écartées l'une de l'autre, afin de laisser l'espace 19 suffisamment grand pour qu'on puisse y introduire la bande de raccordement 2, sur laquelle on referme ensuite, à la manière d'une bouche, les mâchoires 13, 14, lorsque ces dernières passent en position fermée.

De manière avantageuse, lesdites première et seconde mâchoires 13, 14 en position ouverte laissent entre elles ledit espace 19, comme illustré à la figure 4, et elles sont destinées à être pressées, c'est-à-dire rapprochées, l'une vers l'autre, au moyen d'une presse 20, pour passer en position fermée. Par exemple, la bande de raccordement 2, et plus précisément sa partie d'enserrement 18, est introduite au sein dudit espace 19, comme illustré à la figure 5. Ladite presse 20 est par exemple positionnée au-dessus de ladite première mâchoire 13, à l'opposé, par rapport à cette dernière, de ladite seconde mâchoire 14, comme illustré aux figures 4 et 5, avant, pendant ou après l'introduction de la bande de raccordement 2 dans l'espace 19. Par exemple, ladite première mâchoire 13 est ensuite destinée à être pressée par ladite presse 20, en direction de ladite seconde mâchoire 14, de façon à refermer l'espace 19 pour enserrer, c'est-à-dire emprisonner, par pression, et plus précisément par friction, ladite bande de raccordement 2 entre lesdites mâchoires 13, 14, comme illustré aux figures 6 et 7.

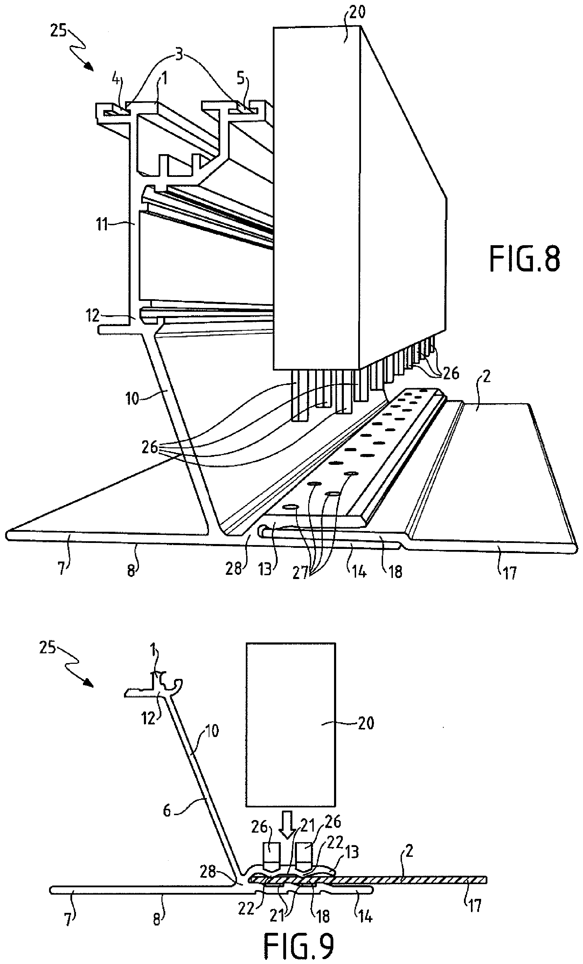

Chaque mâchoire 13, 14 présente avantageusement une surface interne respective délimitant en partie ledit espace 19 et sensiblement tournée vers l'autre mâchoire 13, 14, et une surface externe respective au dos de la surface interne respective, c'est-à-dire opposée à cette dernière et qui ne délimite pas l'espace 19. La surface externe de la seconde mâchoire 14 forme par exemple un prolongement de ladite surface d'appui 8 et/ou une partie de celle-ci. Ainsi, par exemple, ladite presse 20 effectue un mouvement de manière à exercer une pression, comme l'illustrent la flèche de la figure 6 et celle de la figure 9, sur le « *dos* » de la première mâchoire 13, c'est-à-dire sur la surface externe de cette dernière, la première mâchoire 13 subissant la pression se déformant alors de préférence plastiquement (c'est-à-dire irréversiblement), tout en se rapprochant de la seconde mâchoire 14, de manière à enserrer la bande de raccordement 2, placée préalablement dans ledit espace 19, entre les surface internes respectives desdites mâchoires 13, 14. Les mâchoires 13, 14 sont donc avantageusement conçues pour maintenir la bande de raccordement 2 en place, entre leurs surfaces internes respectives, grâce à des forces de friction entre les mâchoires 13, 14 (plus précisément entre leurs surfaces internes respectives) et la bande de raccordement 2. Lesdites forces de friction sont en particulier créées par le serrage ou le rapprochement des mâchoires 13, 14 l'une vers l'autre pour emprisonner entre elles ladite bande 2 (et plus précisément la partie d'enserrement 18).

Optionnellement, le profilé 6, et plus précisément au moins l'une desdites mâchoires 13, 14, par exemple la première mâchoire 13, est conçu(e) pour subir au moins un poinçonnage 27 à l'aide de poinçons 26 qui sont soit solidaires de la presse 20, comme illustré à la figure 8, soit distincts de cette dernière, comme illustré à la figure 9. Ainsi, les poinçons 26 sont avantageusement fournis en dessous de la presse 20 et pressés grâce à cette dernière contre le profilé 6 afin de déformer ce dernier, de façon à :
- comme décrit précédemment, faire passer lesdites mâchoires 13, 14 de la position ouverte à la position fermée, où lesdites mâchoires 13, 14 emprisonnent la bande de raccordement 2, et/ou à
- réaliser des perforations ou des déformations ponctuelles 27 ou poinçonnages 27 du profilé 6 et plus précisément d'une desdites mâchoires 13, 14, par exemple ladite première mâchoire 13, ainsi qu'éventuellement de la bande de raccordement 2, afin de coincer ladite bande de raccordement 2 entre lesdites mâchoires 13, 14.

Les poinçons 26 sont donc préférentiellement destinés à être disposés sous la presse 20 pour venir en contact avec le « *dos* » ou surface externe de la première mâchoire 13, soit pour presser cette dernière en direction de ladite seconde mâchoire 14, soit pour perforer ou déformer ponctuellement ladite première mâchoire 13, par exemple sur une zone limitée entourant un point central, en direction de ladite seconde mâchoire 14, soit réaliser les deux actions successivement ou concomitamment. En d'autres termes, les poinçons 26 viennent, de façon préférentielle, réaliser des poinçonnages 27 du profilé 6 dans la région desdites mâchoires 13, 14, poinçonnant éventuellement également la bande 2, pour parfaire le coinçage de cette dernière entre lesdites mâchoires 13, 14.

Par exemple, comme illustré aux figures 8 et 9, le profilé 6 (et plus précisément ladite première mâchoire 13) est déformé par la presse 20 seule (figure 9) ou la presse 20 munie des poinçons 26 (figure 8), coinçant ainsi la bande 2 entre lesdites mâchoires 13, 14, puis le profilé 6 (et plus précisément ladite première mâchoire 13) et éventuellement la bande 2 est/sont perforé(s) ou déformé(s) ponctuellement (c'est-à-dire poinçonné(s)) par lesdits poinçons 26 afin de mieux solidariser ladite bande 2 auxdites mâchoires 13, 14, et plus généralement audit profilé 6. Lorsque les poinçons 26 sont distincts de la presse 20, ils peuvent par exemple être disposés, comme illustré à la figure 9, au « *dos* » ou surface externe de la première mâchoire 13 avant d'être pressés contre cette dernière en direction de la seconde mâchoire 14 par ladite presse 20, réalisant ainsi avantageusement lesdites perforations ou déformations ponctuelles 27 (ou poinçonnages 27) dans ladite première mâchoire 13.

De façon avantageuse, les perforations ou déformations ponctuelles 27, ou poinçonnages 27, du profilé 6, réalisées par les poinçons 26, permettent d'augmenter encore plus les forces de frictions entre les mâchoires 13, 14 et la bande de raccordement 2, et donc le maintien de cette dernière par le profilé 6.

Les poinçons 26 sont par exemple chacun formé par une pièce de taille réduite (par rapport au profilé 6) et légèrement allongée, sensiblement cylindrique ou conique, ou de toute autre forme appropriée. Chaque poinçon 26 peut par exemple être légèrement effilé ou conique à l'une au moins de ces extrémités, comme illustré à la figure 9, et donc apte à réaliser un « *marquage* » sensiblement ponctuel, ou poinçonnage 27, du profilé 6, et plus précisément de la première mâchoire 13.

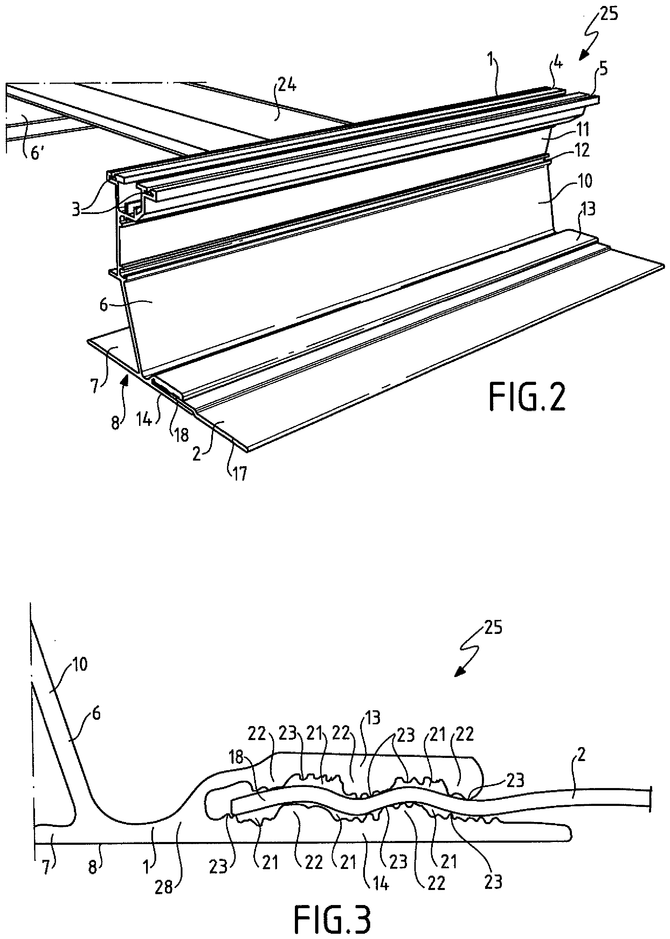

De manière préférentielle, les première et seconde mâchoires 13, 14 présentent des formes respectives sensiblement complémentaires, comme cela est illustré aux figures, et particulièrement visible aux figures 3 à 7 et 9. De telles formes complémentaires permettent avantageusement d'augmenter les forces de friction entre les mâchoires 13, 14 en position fermée et la portion de bande de raccordement 2 enserrée (de préférence formée par la partie d'enserrement 18) par ces dernières, et donc d'assurer une meilleure solidarisation du dispositif de fixation 1 avec ladite bande 2, ce qui au final permet d'améliorer la fixation mécanique du panneau solaire au bâti via le dispositif de fixation 1.

De façon avantageuse, comme illustré aux figures et particulièrement visible aux figures 3 à 7 et 9, chaque mâchoire 13, 14 présente un ensemble respectif de concavités 21 et de protubérances 22, lesdits deux ensembles étant arrangés de manières à ce que les concavités 21 respectives d'une desdites mâchoires 13, 14 soient positionnées sensiblement en regard des protubérances 22 de l'autre mâchoire 13, 14. Chaque protubérance 22 d'une desdites mâchoires 13, 14 se trouve donc préférentiellement en regard d'une concavité 21 correspondante de l'autre mâchoire 13, 14. Les surfaces internes respectives des mâchoires 13, 14 sont avantageusement formées, au moins en partie, par lesdits ensembles de concavités 21 et de protubérances 22. De tels ensembles respectifs de concavités 21 et de protubérances 22 permettent d'assurer des forces de friction importantes entre les mâchoires 13, 14 en position fermée et la portion de bande de raccordement 2 enserrée (de préférence formée par la partie d'enserrement 18) par ces dernières.

Par exemple, les poinçonnages 27 peuvent être réalisés en plaçant les poinçons 26 au dos des protubérances 22, comme illustré à la figure 9.

Optionnellement, une partie ou la totalité des formes complémentaires, et notamment certaines ou la totalité desdites protubérances 22, peuvent être réalisées grâce auxdits poinçons 26 et donc formées au moins en partie par lesdits poinçonnages 27.

Par exemple, comme illustré aux figures, chaque mâchoire 13, 14 présente une forme générale respective de plaque, de préférence non lisse, lesdites deux plaques se rejoignant notamment pour former ladite forme de crochet. Chaque ensemble de concavités 21 et de protubérances 22 est ainsi par exemple formé par :
- des variations de l'épaisseur de la mâchoire 13, 14 respective, et plus précisément par des variations de l'épaisseur de ladite forme de plaque respective, comme illustré à la figure 3, et/ou
- par des variations de la forme de plaque respective de la mâchoire 13, 14 considérée, la forme de la plaque par exemple présentant par exemple elle-même une ondulation ou une forme de vagues, comme illustré à la figure 9, les crêtes desdites vagues formant ainsi lesdites protubérances 22, tandis que les creux desdites vagues forment lesdites concavités 21.

Préférentiellement, au moins l'une desdites première et seconde mâchoires 13, 14 présente des dents 23. Plus préférentiellement encore, chacune desdites première et seconde mâchoires 13, 14 présentent un ensemble respectif de dents 23, lesdites dents 23 formant plus préférentiellement encore au moins en partie les surfaces internes respectives des mâchoires 13, 14. Ces dents 23 permettent avantageusement d'augmenter plus encore la friction entre les mâchoires 13, 14 en position fermée et la bande de raccordement 2 (et plus précisément la partie d'enserrement 18).

De préférence, certaines desdites dents 23 sont positionnées sur lesdites protubérances 22 ou forment au moins en partie ces dernières, tandis que d'autres dents 23 sont positionnées à l'intérieur desdites concavités 21. Les dents 23 forment avantageusement une combinaison avec lesdites protubérances 22 et concavités 21 de manière à augmenter plus encore la friction entre les mâchoires 13, 14 en position fermée et la bande de raccordement 2 (et plus précisément la partie d'enserrement 18).

De manière préférentielle, chaque mâchoire 13, 14 est sensiblement allongée et est parcourue, dans le sens de sa longueur, par lesdites protubérances 22, concavités 21 et/ou dents 23 respectives.

Préférentiellement, les mâchoires 13, 14 sont conçues pour écraser ou déformer la bande de raccordement 2, en particulier lorsque lesdites mâchoires 13, 14 sont en position fermée. Par exemple, lesdites protubérances 22 et concavités 21 sont conçues pour déformer la bande de raccordement 2, et en particulier la partie d'enserrement 18, de manière à lui donner un profil ondulé, en forme de vague, comme l'illustre particulièrement bien la figure 3.

De façon avantageuse, le dispositif de fixation 1 comprend au moins un profilé secondaire 6' sensiblement équivalent, tant par sa structure que par ses fonctions, au profilé 6 préalablement décrit qu'on désignera optionnellement comme étant le profilé primaire 6. Le dispositif de fixation 1 comprend de préférence en outre une entretoise 24 séparant les profilés primaire 6 et secondaire 6' et les solidarisant entre eux, par exemple en rattachant les profilés primaire 6 et secondaire 6' à des extrémités respectives de ladite entretoise 24, par exemple par vissage. L'entretoise 24 est avantageusement réalisée en un matériau similaire ou identique à celui qui forme lesdits profilés 6, 6', notamment un matériau métallique, de préférence de l'aluminium et/ou de l'acier, ou un matériau plastique, de préférence du polyéthylène haute densité (PEHD). Par exemple, une première extrémité de l'entretoise 24 est relié au profilé primaire 6 via la portion droite 11, tandis qu'une deuxième extrémité de l'entretoise 24 est reliée au profilé secondaire 6' via une portion de ce dernier équivalente voire symétrique à la portion droite 11. Le profilé secondaire 6' est préférentiellement disposé de manière sensiblement symétrique au profilé primaire 6 préalablement décrit. Le profilé secondaire 6' est avantageusement destiné à recevoir le même panneau solaire que le profilé primaire 6.

L'invention concerne également en tant que tel, selon un deuxième aspect, un ensemble de fixation 25 d'un panneau solaire à un bâti de type toit. Selon l'invention l'ensemble de fixation 25 comprend un dispositif de fixation 1 tel que mentionné ci-avant (et éventuellement ci-après). La description qui précède concernant le dispositif de fixation 1 s'applique donc également à l'ensemble de fixation 25 selon l'invention. Il en est de même concernant le bâti et le panneau solaire.

Selon l'invention, l'ensemble de fixation 25 comprend en outre une bande de raccordement 2 sensiblement souple conçue pour être reliée d'une part audit bâti et d'autre part audit dispositif de fixation 1, afin de solidariser ce dernier audit bâti. De préférence, la bande de raccordement 2 est telle que mentionnée ci-avant (et éventuellement ci-après), et reliée au profilé 6 tel que décrit précédemment. La description qui précède (et éventuellement qui suit) concernant la bande de raccordement 2 s'applique donc avantageusement également à l'ensemble de fixation 25 selon l'invention.

L'ensemble de fixation 25 est donc préférentiellement assemblé en atelier, en usine ou à proximité du bâti sur lequel le panneau solaire est destiné à être fixé, puis la bande de raccordement 2 est attachée, notamment par thermo-soudage, au bâti de type toit, préservant l'étanchéité, ou au moins une certaine isolation, de ce dernier.

Le bâti comprend avantageusement une membrane, laquelle est de préférence souple et étanche, qui constitue de manière avantageuse une nappe d'étanchéité assurant au moins l'étanchéité à l'eau du bâti, en particulier lorsque ce dernier est formé par une toiture. Ladite bande de raccordement 2 est ainsi, de manière avantageuse, conçue pour être fixée à la surface de ladite membrane, par exemple par thermosoudage, de préférence de manière à préserver l'étanchéité de cette membrane en évitant notamment de la transpercer. Préférentiellement, ladite bande de raccordement 2 est donc uniquement destinée à assurer la liaison mécanique entre le dispositif de fixation 1 et le bâti (plus précisément la membrane d'étanchéité du bâti), de façon notamment à former l'ensemble de fixation 25, de préférence tout en préservant l'étanchéité de ladite membrane d'étanchéité, mais ladite bande de raccordement 2 n'est de manière avantageuse pas destinée à assurer l'étanchéité dudit bâti et/ou de ladite membrane d'étanchéité. Cela signifie en particulier que ladite bande de raccordement 2 se distingue d'un solin, lequel est principalement destiné à étancher une partie extérieure d'un bâti. Ladite bande de raccordement 2 n'est préférentiellement pas réalisée en métal, c'est-à-dire qu'elle est principalement formée d'un ou plusieurs matériaux (souples), autres que les métaux (tels que l'aluminium, l'acier, etc. - ou alors avec une proportion relativement faible de métal). La bande de raccordement 2 est, de préférence, avant tout destinée à assurer la fixation mécanique, via le dispositif de fixation 1, d'un panneau solaire audit bâti, et non à assurer l'étanchéité de ce panneau solaire et/ou du bâti lui-même, bien que ladite bande de raccordement 2 permette avantageusement de conserver l'étanchéité d'une membrane d'étanchéité du bâti en étant soudée à cette dernière. Le dispositif de fixation 1 (et par extension l'ensemble de fixation 25) permet(tent) donc de fixer, de manière avantageuse, un panneau solaire à un bâti, sans pénétrer ou percer ce dernier, par exemple avec des clous, des vis, ou tout autre moyen de fixation invasif, une telle configuration permettant ainsi de ne pas dégrader les propriétés d'étanchéité de ladite membrane d'étanchéité (et plus généralement du bâti).

L'ensemble de fixation 25 comprend, optionnellement, un autre bande de raccordement 2' ou bande de raccordement secondaire 2' sensiblement équivalente, tant par sa structure que par ses fonctions, à la bande de raccordement 2 préalablement décrite qu'on désignera optionnellement comme étant la bande de raccordement primaire 2. La bande de raccordement secondaire 2' est ainsi en particulier conçue pour être reliée d'une part au profilé secondaire 6', de la même façon que la bande de raccordement primaire 2 préalablement mentionnée est reliée au profilé primaire 6, et d'autre part audit bâti.

L'invention concerne également en tant que tel, selon un troisième aspect, dont un mode de réalisation est représenté aux figures 4 à 7 à titre illustratif et non limitatif, un procédé de réalisation d'un ensemble de fixation 25 d'un panneau solaire à un bâti de type toit. De préférence, l'ensemble de fixation 25 obtenu par le procédé est tel que mentionné ci-avant (et éventuellement ci-après), la description qui précède concernant l'ensemble de fixation 25 s'appliquant donc avantageusement également au procédé de réalisation selon l'invention.

Selon l'invention, ledit procédé de réalisation comprend au moins une étape de fourniture d'une bande de raccordement 2 sensiblement souple conçue pour être reliée audit bâti. De préférence, la bande de raccordement 2 est telle que mentionnée précédemment. La bande de raccordement 2 est donc par exemple destiné à être reliée audit bâti par thermo-soudage.

Selon l'invention, le procédé de réalisation comprend en outre une étape de fourniture d'un dispositif de fixation 1 destiné d'une part à être solidarisé audit bâti par la bande de raccordement 2 sensiblement souple, et d'autre part à recevoir ledit panneau. De manière préférentielle, le dispositif de fixation 1 est tel que mentionné précédemment.

Selon une caractéristique de l'invention, le dispositif de fixation 1 comprend au moins un profilé 6 formant une première mâchoire 13 et une seconde mâchoire 14. De préférence, ladite seconde mâchoire 14 est venue de matière avec ladite première mâchoire 13. De façon avantageuse, le profilé 6 et lesdites mâchoires 13, 14 sont tels que mentionnés précédemment. Le profilé 6 est obtenu par exemple au cours de l'étape de fourniture mentionnée ci-avant par étirage, laminage, reconstitution par soudage, pliage, extrusion, etc.

Toujours selon l'invention, comme illustré aux figures 6 et 7, le procédé de réalisation comprend une étape de déformation dudit profilé 6 dans la région desdites mâchoires 13, 14 afin de coincer ladite bande de raccordement 2 entre lesdites mâchoires 13, 14.

Préférentiellement, ladite étape de déformation comprend une sous-étape de pressage d'au moins l'une desdites mâchoires 13, 14, par exemple la première mâchoire 13, vers l'autre, par exemple la seconde mâchoire 14. Ladite sous-étape de pressage est avantageusement réalisée à l'aide d'une presse 20, laquelle est donc avantageusement appliquée contre la première mâchoire 13. De façon avantageuse, lors de ladite étape de déformation, et notamment lors de ladite sous-étape de pressage, lesdites mâchoires 13, 14 passent, par déformation plastique du profilé 6 (et plus préférentiellement de ladite première mâchoire 13), d'une position ouverte, telle que mentionnée précédemment, où elles ménagent entre elles un espace 19 suffisant pour y glisser une portion de ladite bande 2, à une position fermée, telle que mentionnée précédemment, où lesdites mâchoires 13, 14 enserrent ladite bande 2 pour l'attacher ainsi audit profilé 6.

Par exemple, lors de ladite étape de fourniture et avant ladite étape de déformation, une portion de la bande de raccordement 2, et plus précisément la partie d'enserrement 18, est positionnée entre lesdites mâchoires 13, 14 dans l'espace 19, comme illustré à la figure 4, lesdites mâchoires 13, 14 étant donc en position ouverte.

Ensuite, lors de ladite étape de déformation, et notamment lors de ladite sous-étape de pressage, une presse 20 est avantageusement positionnée de manière à pouvoir presser ladite première mâchoire 13 vers ladite seconde mâchoire 14, la première mâchoire 13 se trouvant donc entre la presse 20 et la seconde mâchoire 14, tandis que ladite seconde mâchoire 14 repose sur un support adapté, capable de supporter la pression de ladite presse 20. Lors de ladite étape de déformation, et notamment lors de ladite sous-étape de pressage, ladite première mâchoire 13 est donc en particulier pressée, et déformée, par ladite presse 20 en direction de ladite seconde mâchoire 14, de façon à refermer l'espace 19 pour enserrer, c'est-à-dire emprisonner, par pression, et plus précisément par friction, ladite bande de raccordement 2 entre lesdites mâchoires 13, 14, comme illustré aux figures 6 et 7. Enfin, lors de ladite étape de déformation, et notamment à la fin de ladite étape de pressage, la presse 20 est avantageusement évacuée de manière à ne plus exercer de pression sur les mâchoires 13, 14, la déformation subit par la première mâchoire 13 suffisant à assurer le maintien, ou enserrement, de la bande de raccordement 2 entre lesdites mâchoires 13, 14, lesquelles sont alors en position fermée. Optionnellement, au cours de ladite étape de déformation, les deux mâchoires 13, 14 sont déformées de manière à enserrer ladite bande de raccordement 2.

De préférence, lors de ladite étape de déformation, et notamment lors de ladite sous-étape de pressage, ladite bande de raccordement 2 est déformée par lesdites mâchoires 13, 14. Par exemple lors de ladite étape de pressage, les protubérances 22 respectives de chaque mâchoire 13, 14 pousse une portion de la bande de raccordement 2 dans les concavités respectives de l'autre mâchoire 13, 14, et inversement. En outre, lors de ladite étape de déformation, et notamment lors de ladite sous-étape de pressage, ladite bande de raccordement 2 est préférentiellement écrasée par lesdites mâchoires 13, 14.

Optionnellement, ladite étape de déformation comprend en outre une sous-étape de poinçonnage, comme illustré aux figures 8 et 9, au cours de laquelle le profilé 6, et plus précisément au moins l'une desdites mâchoires 13, 14, par exemple la première mâchoire 13, subit des poinçonnages 27 à l'aide de poinçons 26 qui sont soit solidaires de la presse 20, comme illustré à la figure 8, soit distincts de cette dernière, comme illustré à la figure 9. Ainsi, ladite étape de poinçonnage comprend avantageusement une étape de fourniture desdits poinçons 26 en dessous de la presse 20 et/ou une étape de montage des poinçons 26 avec la presse 20.

Les poinçonnages 27 sont avantageusement des déformations et/ou perforations ponctuelles 27 du profilé 6, et plus précisément de la mâchoire 13, réalisées au moyen desdits poinçons 26.

De préférence, lors de ladite étape de poinçonnage, les poinçons 26 réalisent les perforations ou déformations ponctuelles 27 (ou poinçonnages 27) du profilé 6 et plus précisément de l'une au moins desdites mâchoires 13, 14, par exemple ladite première mâchoire 13, ainsi qu'éventuellement de la bande de raccordement 2, afin de coincer cette dernière entre lesdites mâchoires 13, 14. Ladite étape de poinçonnage est préférentiellement réalisée après ladite étape de pressage. De façon avantageuse, lors de ladite étape de poinçonnage, les poinçons 26 sont pressés sur l'extérieur (et notamment la surface externe) de la première mâchoire 13 en direction de la seconde mâchoire 14. De manière préférentielle, lors de ladite étape de poinçonnage, les poinçons 26 sont pressés de façon suffisamment forte sur ladite première mâchoire 13 pour la perforer et/ou la déformer ponctuellement. De préférence, les perforations et/ou déformations ponctuelles 27 (ou poinçonnages 27) ainsi créées entraînent de la matière issue de la première mâchoire 13 en direction de la seconde mâchoire 14, de manière à coincer ladite bande 2 entre lesdites mâchoires 13, 14.

Le procédé de l'invention permet ainsi de réaliser en particulier un ensemble de fixation 25 particulièrement adapté à la fixation mécanique du panneau solaire au bâti, l'ensemble de fixation 25 comprenant lui-même un dispositif de fixation 1 particulièrement adapté pour être rattaché mécaniquement à une bande de raccordement 2 elle-même solidarisée au bâti.

## Revendications

1. Dispositif de fixation (1) d'un panneau solaire à un bâti de type toit, ledit dispositif de fixation (1) étant destiné d'une part à être solidarisé audit bâti par une bande de raccordement (2) sensiblement souple, et d'autre part à recevoir ledit panneau, **caractérisé en ce qu'**il comprend au moins un profilé (6) formant une première mâchoire (13) et une seconde mâchoire (14) , ledit profilé (6) étant conçu pour être déformé dans la région desdites mâchoires (13, 14) afin de coincer ladite bande de raccordement (2) entre lesdites mâchoires (13, 14).

2. Dispositif de fixation (1) selon la revendication précédente, **caractérisé en ce que** ledit profilé (6) présente une section sensiblement en forme de crochet qui forme lesdites mâchoires (13, 14).

3. Dispositif de fixation (1) selon la revendication 1 ou 2, **caractérisé en ce que** lesdites mâchoires (13, 14) sont conçues pour passer, par déformation plastique du profilé (6), d'une position ouverte, où elles ménagent entre elles un espace (19) suffisant pour y glisser une portion de ladite bande (2), à une position fermée, où lesdites mâchoires (13, 14) enserrent ladite bande (2) pour l'attacher ainsi audit profilé (6).

4. Dispositif de fixation (1) selon l'une des revendications précédentes, **caractérisé en ce que** les première et seconde mâchoires (13, 14) présentent des formes respectives sensiblement complémentaires.

5. Dispositif de fixation (1) selon l'une des revendications précédentes, **caractérisé en ce qu'**au moins l'une desdites première et seconde mâchoires (13, 14) présente des dents (23).

6. Dispositif de fixation (1) selon l'une des revendications précédentes, **caractérisé en ce que** chaque mâchoire (13, 14) présente un ensemble respectif de concavités (21) et de protubérances (22), lesdits deux ensembles étant arrangés de manières à ce que les concavités (21) respectives d'une desdites mâchoires (13, 14) soient positionnées sensiblement en regard des protubérances (22) de l'autre mâchoire (13, 14).

7. Dispositif de fixation (1) selon les revendications 5 et 6, **caractérisé en ce que** certaines desdites dents (23) sont positionnées sur lesdites protubérances (22) ou forment au moins en partie ces dernières, tandis que d'autres dents (23) sont positionnées à l'intérieur desdites concavités (21).

8. Dispositif de fixation (1) selon l'une des revendications précédentes, **caractérisé en ce que** les première et seconde mâchoires (13, 14) sont conçues pour solidariser de manière permanente ledit profilé (6) à la bande de raccordement (2).

9. Dispositif de fixation (1) selon l'une des revendications précédentes, **caractérisé en ce que** ledit profilé (6) est principalement formé d'un matériau métallique, de préférence de l'aluminium et/ou de l'acier, ou d'un matériau plastique, de préférence du polyéthylène haute densité (PEHD).

10. Ensemble de fixation (25) d'un panneau solaire à un bâti de type toit, **caractérisé en ce qu'**il comprend un dispositif de fixation (1) selon l'une des revendications précédentes, et une bande de raccordement (2) sensiblement souple conçue pour être reliée d'une part audit bâti et d'autre part audit dispositif de fixation (1), afin de solidariser ce dernier audit bâti.

11. Ensemble de fixation (25) selon la revendication précédente, **caractérisé en ce que** ladite bande de raccordement (2) est principalement formée d'un matériau choisi parmi le groupe comprenant le bitume, les élastomères dont les caoutchoucs éthylène-propylène-diène monomère (EPDM), le polychlorure de vinyle (PVC), et les polyoléfines dont les polyoléfines thermoplastiques (TPO) et les polyoléfines flexibles (FPO).

12. Procédé de réalisation d'un ensemble de fixation (25) d'un panneau solaire à un bâti de type toit, ledit procédé de réalisation comprenant au moins :
- une étape de fourniture d'une bande de raccordement (2) sensiblement souple conçue pour être reliée audit bâti,
- une étape de fourniture d'un dispositif de fixation (1) destiné d'une part à être solidarisé audit bâti par la bande de raccordement (2) sensiblement souple, et d'autre part à recevoir ledit panneau,
**caractérisé en ce que** le dispositif de fixation (1) comprend au moins un profilé (6) formant une première mâchoire (13) et une seconde mâchoire (14),
et **en ce qu'**il comprend une étape de déformation dudit profilé (6) dans la région desdites mâchoires (13, 14) afin de coincer ladite bande de raccordement (2) entre lesdites mâchoires (13, 14).

13. Procédé de réalisation selon la revendication précédente, **caractérisé en ce que** ladite étape de déformation comprend une sous-étape de pressage d'au moins l'une desdites mâchoires (13, 14) vers l'autre.

14. Procédé de réalisation selon la revendication précédente ou la revendication 12, **caractérisé en ce que** lors de ladite étape de déformation, ladite bande de raccordement (2) est déformée par lesdites mâchoires (13, 14).

15. Procédé de réalisation selon l'une des revendications 12 à 14, **caractérisé en ce que** lors de ladite étape de déformation, ladite bande de raccordement (2) est écrasée par lesdites mâchoires (13, 14).

## Patentansprüche

1. Vorrichtung (1) zur Befestigung eines Solarpaneels an einer Tragstruktur nach der Art eines Daches, wobei die Befestigungsvorrichtung (1) einerseits eingerichtet ist, über eine im Wesentlichen verformbare Verbindungsleiste (2) mit der Tragstruktur verbunden zu werden und andererseits das Paneel aufzunehmen, **dadurch gekennzeichnet, dass** sie mindestens ein Profil (6) aufweist, das eine erste Klemmbacke (13) und eine zweite Klemmbacke (14) ausbildet, wobei das Profil (6) derart ausgebildet ist, dass es im Bereich der Klemmbacken (13, 14) verformbar ist, um die Verbindungsleiste (2) zwischen den Klemmbacken (13, 14) einzuklemmen.

2. Vorrichtung (1) zur Befestigung nach dem vorhergehenden Anspruch, **dadurch gekennzeichnet, dass** das Profil (6) einen im Wesentlichen klammerförmigen Querschnitt aufweist, der die Klemmbacken (13,14) bildet.

3. Vorrichtung (1) zur Befestigung nach Anspruch 1 oder 2, **dadurch gekennzeichnet, dass** die Klemmbacken (13, 14) derart ausgebildet sind, dass sie durch plastische Verformung des Profils (6) von einer offenen Position, in der sie einen zum Einschieben eines Abschnittes der Leiste (2) ausreichenden Freiraum (19) zwischen sich ausbilden, in eine Schließposition überführt werden, in der die Klemmbacken (13, 14) die Leiste (2) zum Halen an dem Profil (6) umklammern.

4. Vorrichtung (1) zur Befestigung nach einem der vorhergehenden Ansprüche, **dadurch gekennzeichnet, dass** die erste und die zweite Klemmbacke (13, 14) jeweils eine im Wesentlichen komplementäre Form aufweisen.

5. Vorrichtung (1) zur Befestigung nach einem der vorhergehenden Ansprüche, **dadurch gekennzeichnet, dass** mindestens eine der ersten und zweiten Klemmbacken (13, 14) Krallen (23) aufweist.

6. Vorrichtung (1) zur Befestigung nach einem der vorhergehenden Ansprüche, **dadurch gekennzeichnet, dass** jede Klemmbacke (13,14) eine bestimmte Anordnung von Vertiefungen (21) und Erhebungen (22) aufweist, wobei die beiden Anordnungen so angeordnet sind, dass die jeweiligen Vertiefungen (21) einer der Klemmbacken (13, 14) im Wesentlichen gegenüber den Erhebungen (22) der anderen Klemmbacke (13, 14) angeordnet sind.

7. Vorrichtung (1) zur Befestigung nach den Ansprüchen 5 und 6, **dadurch gekennzeichnet, dass** einige der Krallen (23) auf den Erhebungen (22) angeordnet sind oder diese zumindest teilweise bilden, während andere Krallen (23) innerhalb der Vertiefungen (21) angeordnet sind.

8. Vorrichtung (1) zur Befestigung nach einem der vorhergehenden Ansprüche, **dadurch gekennzeichnet, dass** die erste und die zweite Klemmbacke (13, 14) derart gestaltet sind, dass sie das Profil (6) dauerhaft mit der Verbindungsleiste (2) verbinden.

9. Vorrichtung (1) zur Befestigung nach einem der vorhergehenden Ansprüche, **dadurch gekennzeichnet, dass** das Profil (6) hauptsächlich aus einem metallischen Material, vorzugsweise Aluminium und/oder Stahl, oder aus einem Kunststoffmaterial, vorzugsweise Polyethylen hoher Dichte (HDPE), hergestellt ist.

10. Anordnung (25) zur Befestigung eines Solarpaneels an einer Tragstruktur nach der Art eines Daches, **dadurch gekennzeichnet, dass** sie eine Vorrichtung (1) zur Befestigung nach einem der vorhergehenden Ansprüche und eine im Wesentlichen verformbare Verbindungsleiste (2) umfasst, die einerseits zur Verbindung mit der Tragstruktur und andererseits zur Verbindung mit der Befestigungsvorrichtung (1) eingerichtet ist, um letztere mit der Tragstruktur zu verbinden.

11. Anordnung (25) zur Befestigung nach dem vorhergehenden Anspruch, **dadurch gekennzeichnet, dass** die Verbindungsleiste (2) überwiegend aus einem Material besteht, das aus der Gruppe ausgewählt ist, die aus Bitumen, Elastomeren einschließlich Ethylen-Propylen-Dien-Monomer-Kautschuken (EPDM), Polyvinylchlorid (PVC) und Polyolefinen einschließlich thermoplastischen Polyolefinen (TPO) und flexiblen Polyolefinen (FPO) besteht.

12. Herstellungsverfahren für eine Anordnung (25) zur Befestigung eines Solarpaneels an einer Tragstruktur nach der Art eines Daches, wobei das Herstellungsverfahren mindestens Folgendes umfasst:
- einen Schritt des Bereitstellens einer im Wesentlichen verformbaren Verbindungsleiste (2), die derart gestaltet ist, dass sie mit der Tragstruktur verbindbar ist,
- einen Schritt des Bereitstellens einer Vorrichtung (1) zur Befestigung, die eingerichtet ist, einerseits durch die im Wesentlichen verformbare Verbindungsleiste (2) fest mit der Tragstruktur verbunden zu werden und andererseits das Paneel aufzunehmen,
**dadurch gekennzeichnet, dass** die Befestigungsvorrichtung (1) mindestens ein Profil (6) umfasst, das eine erste Klemmbacke (13) und eine zweite Klemmbacke (14) ausbildet,
und dadurch, dass es einen Schritt zum Deformieren des Profils (6) im Bereich der Klemmbacken (13, 14) umfasst, um die Verbindungsleiste (2) zwischen den Klemmbacken (13, 14) einzuklemmen.

13. Herstellungsverfahren nach dem vorhergehenden Anspruch, **dadurch gekennzeichnet, dass** der Deformationsschritt einen Unterschritt umfasst, bei dem zumindest eine der Klemmbacken (13, 14) in Richtung der anderen gepresst wird.

14. Herstellungsverfahren nach dem vorhergehenden Anspruch oder nach Anspruch 12, **dadurch gekennzeichnet, dass** bei dem Deformationsschritt die Verbindungsleiste (2) durch die Klemmbacken (13, 14) verformt wird.

15. Herstellungsverfahren nach einem der Ansprüche 12 bis 14, **dadurch gekennzeichnet, dass** während des Verformungsschritts die Verbindungsleiste (2) durch die Klemmbacken (13, 14) gequetscht wird.

## Claims

1. Device (1) for attaching a solar panel to a frame of the roof type, said attaching device (1) being intended firstly to be secured to said frame by a substantially flexible connecting strip (2), and secondly to receive said panel, **characterised in that** it comprises at least one profiled member (6) forming a first jaw (13) and a second jaw (14), said profiled member (6) being designed to be deformed in the region of said jaws (13, 14) in order to wedge said connecting strip (2) between said jaws (13, 14).

2. Attaching device (1) according to the preceding claim, **characterised in that** said profiled member (6) has a cross section substantially in the form of a hook that forms said jaws (13, 14).

3. Attaching device (1) according to claim 1 or 2, **characterised in that** said jaws (13, 14) are designed to pass, by plastic deformation of the profiled member (6), from an open position, where they form between them a space (19) sufficient for sliding therein a portion of said strip (2), to a closed position, where said jaws (13, 14) grip said strip (2) to thus attach it to said profiled member (6).

4. Attaching device (1) according to one of the preceding claims, **characterised in that** the first and second jaws (13, 14) have substantially complementary respective shapes.

5. Attaching device (1) according to one of the preceding claims, **characterised in that** at least one of said first and second jaws (13, 14) has teeth (23).

6. Attaching device (1) according to one of the preceding claims, **characterised in that** each jaw (13, 14) has a respective set of concavities (21) and of protuberances (22), said two sets being arranged so that the respective concavities (21) of one of said jaws (13, 14) are positioned substantially opposite protuberances (22) of the other jaw (13, 14).

7. Attaching device (1) according to claims 5 and 6, **characterised in that** some of said teeth (23) are positioned on said protuberances (22) or form the latter at least partly, while other teeth (23) are positioned inside said concavities (21).

8. Attaching device (1) according to one of the preceding claims, **characterised in that** the first and second jaws (13, 14) are designed to permanently secure said profiled member (6) to the connecting strip (2).

9. Attaching device (1) according to one of the preceding claims, **characterised in that** said profiled member (6) is mainly formed from a metal material, preferably aluminium and/or steel, or from a plastics material, preferably high-density polyethylene (HDPE).

10. Assembly (25) for attaching a solar panel to a frame of the roof type, **characterised in that** it comprises an attaching device (1) according to one of the preceding claims, and a substantially flexible connecting strip (2) designed to be connected firstly to said frame and secondly to said attaching device (1), in order to secure the latter to said frame.

11. Attaching assembly (25) according to the preceding claim, **characterised in that** said connecting strip (2) is mainly formed from a material selected from the group comprising bitumen, elastomers including ethylene propylene diene monomer (EPDM) rubber, polyvinyl chloride (PVC), and polyolefins including thermoplastic polyolefins (TPOs) and flexible polyolefins (FPOs).

12. Method for producing an assembly (25) for attaching a solar panel to a frame of the roof type, said production method comprising at least:
- a step of providing a substantially flexible connecting strip (2) designed to be connected to said frame,
- a step of providing an attaching device (1) intended firstly to be secured to said frame by the substantially flexible connecting strip (2), and secondly to receive said panel,
**characterised in that** the attaching device (1) comprises at least one profiled member (6) forming a first jaw (13) and a second jaw (14),
and **in that** it comprises a step of deforming said profiled member (6) in the region of said jaws (13, 14) so as to wedge said connecting strip (2) between said jaws (13, 14).

13. Production method according to the preceding claim, **characterised in that** said deformation step comprises a substep of pressing at least one of said jaws (13, 14) towards the other.

14. Production method according to the preceding claim or claim 12, **characterised in that**, during said deformation step, said connecting strip (2) is deformed by said jaws (13, 14).

15. Production method according to one of claims 12 to 14, **characterised in that**, during said deformation step, said connecting strip (2) is crushed by said jaws (13, 14).
